# EUROPEAN PATENT APPLICATION

(11) **EP 4 806 842 A1**
(43) Date of publication of application: **16.09.2026**
(21) Application number: 26153590.0
(22) Date of filing: 22.01.2026
(51) Int. Cl.: C01B 33/023

(54) **METHOD FOR PRODUCING POROUS SILICON ELECTRODE ACTIVE MATERIAL PARTICLES, POROUS SILICON ELECTRODE ACTIVE MATERIAL PARTICLES, ELECTRODE MIXTURE, AND BATTERY**

(30) Priority: 12.03.2025 JP 2025039341
(71) Applicant: Toyota Jidosha Kabushiki Kaisha, Toyota-shi, Aichi-ken 471-8571 (JP)
(72) Inventor: WAKASUGI, Satoshi, Toyota-shi, 471-8571 (JP); SUGANUMA, Hikaru, Toyota-shi, 471-8571 (JP); NOSE, Masafumi, Toyota-shi, 471-8571 (JP)
(74) Representative: D Young & Co LLP

(57) **Abstract**

The present disclosure provides a method for producing porous silicon electrode active material particles in which expansion and contraction are suppressed and the initial charge-discharge efficiency of a battery can be improved, porous silicon electrode active material particles, an electrode mixture including such porous silicon electrode active material particles, and a battery including such an electrode mixture. The method of the present disclosure for producing porous silicon electrode active material particles includes: (a) reducing porous silica particles with magnesium to obtain precursor particles containing silicon and magnesium oxide; and (b) removing the magnesium oxide from the precursor particles. In the porous silicon electrode active material particles of the present disclosure, the oxygen concentration is 6.5 mass% or less, the ratio of the oxygen concentration, expressed in mass%, to the specific surface area expressed, in m²/g, is 0.050 or less, and the pore volume is 0.9 cc/g or more.

## Description

### FIELD

The present disclosure relates to a method for producing porous silicon electrode active material particles, porous silicon electrode active material particles, an electrode mixture, and a battery.

### BACKGROUND

As disclosed in PTL 1, a battery containing silicon as an electrode active material is known.

### [CITATION LIST]

### [PATENT LITERATURE]

[PTL 1] Japanese Unexamined Patent Publication (Kokai) No. 2024-165116

### SUMMARY

### [TECHNICAL PROBLEM]

Silicon is known to undergo expansion and contraction in response to charging and discharging of a battery.

As regards a secondary battery, the initial charge-discharge efficiency thereof should preferably be high.

An object of the present disclosure is to provide a method for producing porous silicon electrode active material particles in which expansion and contraction are suppressed and the initial charge-discharge efficiency of a battery can be improved, porous silicon electrode active material particles, an electrode mixture including such porous silicon electrode active material particles, and a battery including such an electrode mixture.

The present inventors have found that this object can be achieved by the following means.

### <Aspect 1>

A method for producing porous silicon electrode active material particles, the method including:
(a) reducing porous silica particles with magnesium to obtain precursor particles containing silicon and magnesium oxide; and
(b) removing the magnesium oxide from the precursor particles.

### <Aspect 2>

The method according to aspect 1, wherein an average pore diameter of the porous silica particles is from 1 nm to 20 nm.

### <Aspect 3>

The method according to aspect 1 or 2, wherein in Step (a), the porous silica particles are reduced with the magnesium at a temperature of from 650°C to 800°C

### <Aspect 4>

The method according to any one of aspects 1 to 3, wherein in Step (a), the porous silica particles are reduced with the magnesium by mixing the porous silica particles and the magnesium.

### <Aspect 5>

The method according to any one of aspects 1 to 4, wherein in Step (b), the magnesium oxide is removed by treating the precursor particles with an acid.

### <Aspect 6>

Porous silicon electrode active material particles:
wherein an oxygen concentration is 6.5 mass% or less,
wherein a ratio of the oxygen concentration, expressed in mass%, to a specific surface area, expressed in m²/g, is 0.050 or less, and
wherein a pore volume is 0.9 cc/g or more.

### <Aspect 7>

The porous silicon electrode active material particles according to aspect 6,
wherein the oxygen concentration is from 3.0 mass% to 6.0 mass%,
wherein the ratio of the oxygen concentration, expressed in mass%, to the specific surface area, expressed in m²/g, is from 0.015 to 0.040, and
wherein the pore volume is from 0.9 cc/g to 1.5 cc/g.

### <Aspect 8>

The porous silicon electrode active material particles according to aspect 6 or 7, wherein the specific surface area is from 50 m²/g to 300 m²/g.

### <Aspect 9>

The porous silicon electrode active material particles according to any one of aspects 6 to 8, wherein a mode diameter of pores is from 25 nm to 100 nm.

### <Aspect 10>

The porous silicon electrode active material particles according to any one of aspects 6 to 9, wherein a half-value width in a pore distribution is from 20 nm to 75 nm.

### <Aspect 11>

The porous silicon electrode active material particles according to any one of aspects 6 to 10, wherein a d50 particle diameter is from 3.0 µm to 8.0 µm.

### <Aspect 12>

An electrode mixture including the porous silicon electrode active material particles according to any one of aspects 6 to 11.

### <Aspect 13>

A battery, having a negative electrode active material layer, wherein
the negative electrode active material layer includes the electrode mixture according to aspect 12.

### <Aspect 14>

The battery according to aspect 13, wherein the battery is a solid-state battery.

### [ADVANTAGEOUS EFFECTS OF INVENTION]

According to the present disclosure, it is possible to provide a method for producing porous silicon electrode active material particles in which expansion and contraction are suppressed and the initial charge-discharge efficiency of a battery can be improved, porous silicon electrode active material particles, an electrode mixture containing such porous silicon electrode active material particles, and a battery including such an electrode mixture.

### BRIEF DESCRIPTION OF DRAWINGS

Fig. 1 is a schematic cross-sectional view illustrating an example of a battery of the present disclosure.
Fig. 2 is a graph showing a relationship between a specific surface area and an oxygen concentration for each of porous silicon electrode active material particles of Examples and Comparative Examples.
Fig. 3 is a graph showing a relationship between an oxygen concentration of porous silicon electrode active material particles and initial charge-discharge efficiency of a battery for each of Examples and Comparative Examples.
Fig. 4 is a graph showing a relationship between a specific surface area of porous silicon electrode active material particles and a restraint pressure increase amount of a battery for each of Examples and Comparative Examples.

### DESCRIPTION OF EMBODIMENTS

Hereinafter, embodiments of the present disclosure will be described in detail. However, it should be noted that the present disclosure is not limited to the following embodiments, and can be variously modified within the scope thereof.

### <<Method for Producing Porous Silicon Electrode Active Material Particles>>

The method of the present disclosure for producing porous silicon electrode active material particles includes: (a) reducing porous silica particles with magnesium to obtain precursor particles containing silicon and magnesium oxide; and (b) removing the magnesium oxide from the precursor particles.

The present inventors have found that in the porous silicon electrode active material particles produced using the porous silica particles as a starting material, expansion and contraction in response to charging and discharging of a battery are suppressed, and initial charge-discharge efficiency of a battery containing the porous silicon electrode active material particles is improved. The reason for this is not intended to be bound by any theory, but is presumed to be as follows. Specifically, in the case of using solid silica particles as a starting material versus porous silica particles as a starting material, porous silicon electrode active material particles with different physical property values, particularly specific surface areas and pore volumes, as well as different composition ratios, particularly oxygen concentration, are produced. It is presumable that such a difference in physical property values and composition ratios affects the expansion and contraction of the porous silicon electrode active material particles. In the porous silicon electrode active material particles of the present disclosure produced using porous silica particles as a starting material, a physical property value and a composition ratio are within appropriate ranges, and therefore, it is presumable that expansion and contraction in response to charging and discharging of a battery are suppressed, and the initial charge-discharge efficiency of a battery containing the porous silicon electrode active material particles is improved.

In the present disclosure, the "porous silica particles" mean silica particles having a plurality of pores in the particles, and the "solid silica particles" mean silica particles lacking such pores.

The "electrode active material" may be a "positive electrode active material" or a "negative electrode active material", particularly a "negative electrode active material".

Hereinafter, the method of the present disclosure for producing porous silicon electrode active material particles will be described.

### <Preparation of Precursor Particles>

The method of the present disclosure includes (a) reducing porous silica particles with magnesium to obtain precursor particles containing silicon and magnesium oxide. The use of the porous silica particles as a starting material enables the production of porous silicon electrode active material particles having a predetermined physical property value and a composition ratio within appropriate ranges, particularly porous silicon electrode active material particles having a relatively large pore volume, and thus being expected to suppress expansion and contraction.

In the method of the present disclosure, the average pore diameter of the porous silica particles may be from 1 nm to 20 nm, from 3 nm to 15 nm, from 4 nm to 12 nm, or from 8 nm to 12 nm. The average pore diameter of the porous silica may be 1 nm or more, 2 nm or more, 3 nm or more, 4 nm or more, 5 nm or more, 6 nm or more, 7 nm or more, 8 nm or more, 9 nm or more, or 10 nm or more, and may be 20 nm or less, 17 nm or less, 15 nm or less, 13 nm or less, 12 nm or less, 11 nm or less, or 10 nm or less. When the average pore diameter of the porous silica particles is within the above range, in particular, the specific surface area, the mode diameter of pores, and the like of the porous silicon electrode active material particles are easily set within appropriate ranges.

As the porous silica particles, a commercial product may be used, and in this case, porous silica particles having an average pore diameter within the above range may be used. Examples of such commercial products include Wakosil 60 (average pore diameter: 6 nm) available from FUJIFILM Wako Pure Chemical Corporation and Inertsil SIL-100A (average pore diameter: 10 nm) available from GL Sciences Inc.

The porous silica particles may be prepared by a known method.

The average pore diameter of the porous silica particles may be an arithmetic average pore diameter determined from a log differential pore volume distribution obtained by a BJH method, based on a measurement of a sample conducted by a nitrogen adsorption method using a specific surface area/pore size analyzer (BELSORP MAX X, available from MicrotracBEL Corp.).

In the method of the present disclosure, in Step (a), the porous silica particles may be reduced with magnesium at a temperature of 650°C to 800°C, or 680°C to 780°C, or 730°C to 780°C. This temperature may be 650°C or more, 660°C or more, 670°C or more, 680°C or more, 690°C or more, 700°C or more, 710°C or more, 720°C or more, 730°C or more, 740°C or more, or 750°C or more, and may be 800°C or less, 790°C or less, 780°C or less, 760°C or less, or 750°C or less. When the temperature is within the above range, the physical property value and the composition ratio of the porous silicon electrode active material particles are easily set within appropriate ranges.

The time for the reduction treatment is not particularly limited, and may be, for example, from 1 hour to 20 hours, from 5 hours to 15 hours, or from 8 hours to 12 hours. The time may be 1 hour or more, 3 hours or more, 5 hours or more, 8 hours or more, 9 hours or more, or 10 hours or more, and may be 20 hours or less, 15 hours or less, 12 hours or less, 11 hours or less, or 10 hours or less.

In the method of the present disclosure, in Step (a), the porous silica particles may be reduced with magnesium by mixing the porous silica particles with magnesium. The mixing method is not particularly limited, and a known method can be adopted.

The other method of reducing the porous silica particles with magnesium is not particularly limited, and examples thereof include a method of bringing the porous silica particles into contact with magnesium vapor. The method for generating magnesium vapor is not particularly limited, and examples thereof include a method of heating a reducing agent serving as a magnesium source such as a magnesium alloy or metallic magnesium.

The magnesium alloy is not particularly limited, and may be, for example, at least one selected from Mg₂Si, MgCa, MgCu₂, MgNi₂, and MgSn.

In the method of bringing the porous silica particles into contact with magnesium vapor, the pressure at which the porous silica particles are reduced with magnesium is not particularly limited. The pressure may be, for example, less than 1 atm, 100 Pa or less, or 20 Pa or less.

### <Removal of Magnesium Oxide>

The method of the present disclosure includes (b) removing the magnesium oxide from the precursor particles. In this manner, pores are formed in the portion where the magnesium oxide is removed from the precursor particles.

In the method of the present disclosure, in Step (b), the magnesium oxide may be removed by treating the precursor particles with an acid.

The acid is not particularly limited, and examples thereof include inorganic acids such as hydrochloric acid, nitric acid, and sulfuric acid.

The pH of the acid is not particularly limited, and may be, for example, 3 or less, 2 or less, or 1 or less.

The molar ratio of the magnesium oxide to the acid is not particularly limited, and may be, for example, from 1:5 to 1:10.

### <<Porous Silicon Electrode Active Material Particles>>

In the porous silicon electrode active material particles of the present disclosure, the oxygen concentration is 6.5 mass% or less, the ratio of the oxygen concentration, expressed in mass%, to the specific surface area expressed, in m²/g, (value of oxygen concentration (mass%)/specific surface area (m²/g)) is 0.050 or less, and the pore volume is 0.9 cc/g or more.

It is presumable that the expansion and contraction of the porous silicon electrode active material particles are easily suppressed by increasing the specific surface area of the porous silicon electrode active material particles. However, when the specific surface area is increased, there is a concern that the oxygen concentration in the porous silicon electrode active material particles tends to increase, i.e., silicon oxide (SiOₓ, x > 1) tends to be produced as a by-product. Such silicon oxide is a cause of deterioration of the initial charge-discharge efficiency.

In contrast, the present inventors have unexpectedly found that in a battery including the porous silicon electrode active material particles of the present disclosure in which the oxygen concentration, the value of oxygen concentration (mass%)/specific surface area (m²/g), and the pore volume are within predetermined ranges, the expansion and contraction of the porous silicon electrode active material particles in response to charging and discharging are suppressed, and the initial charge-discharge efficiency of the battery is improved.

The reason for this is not intended to be bound by any theory, but is presumed as follows.

Specifically, in the porous silicon electrode active material particles of the present disclosure, the value of oxygen concentration (mass%)/specific surface area (m²/g) is within a predetermined range, and it is thus presumable that the degree of increase in oxygen concentration due to an increase in specific surface area is small, and therefore, the initial charge-discharge efficiency can be improved. In the porous silicon electrode active material particles of the present disclosure, the reason why the degree of increase in the oxygen concentration with an increase in the specific surface area is small is considered as follows:
For example, in the case of producing porous silicon electrode active material particles by the method of the present disclosure described above,
- since the silica serving as a starting material is porous, the reaction between the porous silica particles and magnesium is likely to proceed, and therefore, the unreacted silica (SiO₂) is likely to decrease; and
- since the pore volume of the produced porous silicon electrode active material particles is large, in the case of removing magnesium oxide by, for example, an acid treatment, the frequency of contact between the acid and the magnesium oxide increases, and therefore, magnesium oxide (MgO) is easily removed.

In addition, in the electrode active material particles having a relatively small pore volume, it is presumable that there is a correlation between the size of the specific surface area and the magnitude of expansion and contraction. In contrast, in the porous silicon electrode active material particles of the present disclosure, which has a relatively large pore volume, it is presumable that the size of the specific surface area also affects the magnitude of expansion and contraction, but the magnitude of the pore volume is rather the dominant factor. Therefore, in the porous silicon electrode active material particles of the present disclosure, it is presumed that the expansion and contraction are suppressed, even when the specific surface area is relatively small.

Hereinafter, each element constituting the porous silicon electrode active material particles of the present disclosure will be described.

In the porous silicon electrode active material particles of the present disclosure, the oxygen concentration may be from 3.0 mass% to 6.0 mass%, the ratio of the oxygen concentration, represented in mass%, to the specific surface area, represented in m²/g, may be from 0.015 to 0.040, and the pore volume may be from 1.0 cc/g to 1.5 cc/g.

In the porous silicon electrode active material particles of the present disclosure, the oxygen concentration may be from 3.0 mass% to 6.0 mass% or from 3.0 mass% to 4.0 mass%. The oxygen concentration may be 0 mass%, more than 0 mass%, 0.1 mass% or more, 0.5 mass% or more, 1.0 mass% or more, 2.0 mass% or more, 3.0 mass% or more, or 3.5 mass% or more, and may be 6.0 mass% or less, 5.6 mass% or less, 5.0 mass% or less, 4.0 mass% or less, or 3.5 mass% or less. When the oxygen concentration is within the above range, the initial charge-discharge efficiency of the battery including the porous silicon electrode active material particles of the present disclosure can be effectively improved.

Examples of the method of measuring the oxygen concentration include a method of measuring the mass ratio of oxygen using an oxygen/nitrogen/hydrogen analyzer (ONH analyzer) (EMGA-930, available from HORIBA Ltd.).

In the porous silicon electrode active material particles of the present disclosure, the ratio of the oxygen concentration, expressed in mass%, to the specific surface area, expressed in by m²/g may be from 0.015 to 0.040 or from 0.030 to 0.040. This ratio may be 0.001 or more, 0.005 or more, 0.010 or more, 0.015 or more, 0.020 or more, 0.025 or more, 0.030 or more, 0.032 or more, or 0.034 or more, and may be 0.045 or less, 0.040 or less, or 0.035 or less. The ratio being within the above range means that the degree of increase in the oxygen concentration with an increase in the specific surface area is relatively small, and thus, the initial charge-discharge efficiency of a battery including the porous silicon electrode active material particles of the present disclosure can be effectively improved.

Examples of the method of measuring the specific surface area include a method of measuring a sample by a nitrogen adsorption method using a specific surface area/pore size analyzer (BELSORP MAX X, available from MicrotracBEL Corporation) to measure the specific surface area by a BET method.

In the porous silicon electrode active material particles of the present disclosure, the pore volume may be from 0.9 cc/g to 1.5 cc/g, from 0.9 cc/g to 1.3 cc/g, or from 0.9 cc/g to 1.2 cc/g. The pore volume may be 0.9 cc/g or more, 1.0 cc/g or more, or 1.1 cc/g or more, and may be 2.0 cc/g or less, 1.7 cc/g or less, 1.5 cc/g or less, 1.4 cc/g or less, 1.3 cc/g or less, 1.2 cc/g or less, or 1.1 cc/g or less. When the pore volume is within the above range, expansion and contraction of the porous silicon electrode active material particles are effectively suppressed.

The pore volume may be a value calculated from an integrated pore volume distribution obtained by a BJH method, based on a measurement of a sample conducted by a nitrogen adsorption method using a specific surface area/pore size analyzer (BELSORP MAX X, available from MicrotracBEL Corporation).

In the porous silicon electrode active material particles of the present disclosure, the specific surface area may be from 50 m²/g to 300 m²/g, from 50 m²/g to 200 m²/g, or from 50 m²/g to 150 m²/g. The specific surface area may be 10 m²/g or more, 50 m²/g or more, or 100 m²/g or more, and may be 500 m²/g or less, 400 m²/g or less, 300 m²/g or less, 200 m²/g or less, 150 m²/g or less, 130 m²/g or less, or 110 m²/g or less. When the specific surface area is within the above range, expansion and contraction of the porous silicon electrode active material particles are effectively suppressed.

In the porous silicon electrode active material particles of the present disclosure, the mode diameter of pores may be from 25 nm to 100 nm, from 35 nm to 75 nm, or from 40 nm to 60 nm. The mode diameter of pores may be 10 nm or more, 20 nm or more, 30 nm or more, 35 nm or more, 40 nm or more, 45 nm or more, or 50 nm or more, and may be 100 nm or less, 75 nm or less, 60 nm or less, or 50 nm or less. When the mode diameter of pores is within the above range, expansion and contraction of the porous silicon electrode active material particles are effectively suppressed.

The mode diameter of pores may be a value indicating a peak top of a log differential pore volume distribution obtained by BJH method, based on a measurement of a sample conducted by a nitrogen adsorption method using a specific surface area/pore size analyzer (BELSORP MAX X, available from MicrotracBEL Corporation).

In the porous silicon electrode active material particles of the present disclosure, the half-value width in the pore distribution may be from 20 nm to 75 nm. The half-value width in the pore distribution may be 1 nm or more, 5 nm or more, 10 nm or more, 20 nm or more, 25 nm or more, 30 nm or more, 35 nm or more, 40 nm or more, or 45 nm or more, and may be 100 nm or less, 75 nm or less, 60 nm or less, 50 nm or less, or 45 nm or less. When the half-value width in the pore distribution is within the above range, expansion and contraction of the porous silicon electrode active material particles are effectively suppressed.

The half-value width may be a value calculated from the integrated pore volume distribution.

In the porous silicon electrode active material particles of the present disclosure, the d50 particle diameter may be from 3.0 µm to 8.0 µm, from 4.0 µm to 7.0 µm, or from 5.0 µm to 6.0 µm. The d50 particle diameter may be 2.5 µm or more, 3.0 µm or more, 3.5 µm or more, 4.0 µm or more, 4.5 µm or more, 5.0 µm or more, 5.2 µm or more, 5.4 µm or more, or 5.5 or more, and may be 10 µm or less, 9.0 µm or less, 8.0 µm or less, 7.0 µm or less, 6.5 µm or less, 6.0 µm or less, 5.8 µm or less, 5.7 µm or less, or 5.6 µm or less. The d50 particle diameter can be appropriately changed according to the particle diameter of the porous silica particles serving as a starting material, the pore volume of the porous silicon electrode active material particles, and the like.

Examples of the method of measuring the d50 particle diameter include a method of measuring the particle diameter by a laser diffraction/scattering method using a laser diffraction/scattering apparatus (Partica LA-960V2, available from HORIBA, Ltd.) with water as a solvent.

The porous silicon electrode active material particles of the present disclosure may be produced by the method of the present disclosure for producing porous silicon electrode active material particles.

### <<Electrode Mixture>>

The electrode mixture of the present disclosure contains the porous silicon electrode active material particles of the present disclosure. The electrode mixture may optionally include a solid electrolyte, a conductive additive, a binder, and the like.

In the present disclosure, the "electrode mixture" refers to a composition that can constitute an electrode active material layer as it is or by further containing other components. In the present disclosure, the "electrode mixture slurry" refers to a slurry that includes a dispersion medium in addition to the "electrode mixture" and can be applied and dried to form an electrode active material layer.

In the present disclosure, the "electrode mixture" may be a "positive electrode mixture" or a "negative electrode mixture", particularly a "negative electrode mixture".

Hereinafter, each element constituting the electrode mixture of the present disclosure will be described.

### <Porous Silicon Electrode Active Material Particles>

Reference may be made to the above description regarding the porous silicon electrode active material particles.

The content of the porous silicon electrode active material particles in the electrode mixture is not particularly limited, and can be appropriately set in consideration of a desired battery capacity and the like.

### <Solid Electrolyte>

Examples of the solid electrolyte include inorganic solid electrolytes such as a sulfide solid electrolyte, an oxide solid electrolyte, a nitride solid electrolyte, and a halide solid electrolyte, and organic polymer electrolytes such as a polymer electrolyte. The solid electrolyte may be, in particular, a sulfide solid electrolyte.

For example, when the battery is a lithium ion secondary battery, the solid electrolyte may have lithium ionic conductivity.

Examples of the sulfide solid electrolyte having lithium ionic conductivity include a solid electrolyte containing a Li element, an X element (X represents at least one of P, As, Sb, Si, Ge, Sn, B, Al, Ga, and In), and a S element. The sulfide solid electrolyte may further contain at least one of an O element and a halogen element. Examples of the halogen element include an F element, a Cl element, a Br element, and an I element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂Ss-LiI, Li₂S-B₂S₃, Li₂S-P₂S₅-ZmSn (where m and n are positive numbers; and Z represents any of Ge, Zn, and Ga), Li₂S-GeS₂, Li₂S-SiS₂-Li₃PO₄, and Li₂S-SiS₂-LiₓMO_{y} (where x and y are positive numbers; and M represents any one of P, Si, Ge, B, Al, Ga, and In).

Examples of the oxide solid electrolyte having lithium ionic conductivity include a solid electrolyte containing a Li element, a Y element (Y represents at least one of Nb, B, Al, Si, P, Ti, Zr, Mo, W, and S), and an O element. Specific examples thereof include garnet-type solid electrolytes such as Li₇La₃Zr₂O₁₂, Li₇₋ₓLa₃(Zr₂₋ₓNbₓ)O₁₂ (0≤x≤2), and Li₅La₃Nb₂O₁₂; perovskite-type solid electrolytes such as (Li,La)TiO₃, (Li,La)NbO₃, and (Li,Sr)(Ta,Zr)O₃; nasicon-type solid electrolytes such as Li(Al,Ti)(PO₄)₃ and Li(Al,Ga)(PO₄)₃; Li-P-O-based solid electrolytes such as Li₃PO₄ and LIPON (compound in which part of O in Li₃PO₄ is substituted with N); and Li-B-O-based solid electrolytes such as Li₃BO₃ and a compound in which a part of O of Li₃BO₃ is substituted with C.

The content of the solid electrolyte in the electrode mixture is not particularly limited, and can be appropriately set in consideration of the desired ionic conductivity and the like.

### <Conductive Additive>

The conductive additive may be, for example, a carbon material, metal particles, or a combination thereof. The carbon material may be, for example, a non-fibrous carbon material such as acetylene black (AB) or Ketjenblack (KB); a fibrous carbon material such as vapor-grown carbon fiber (VGCF), carbon nanotube (CNT), or carbon nanofiber (CNF); or a combination thereof. The metal particles may be, for example, nickel, copper, iron, stainless steel, or a combination thereof.

The content of the conductive additive in the electrode mixture is not particularly limited, and can be appropriately set in consideration of the desired conductivity and the like.

### <Binder>

The binder may be, for example, a rubber-based binder such as butadiene rubber, hydrogenated butadiene rubber, styrene butadiene rubber (SBR), hydrogenated styrene butadiene rubber, nitrile butadiene rubber, hydrogenated nitrile butadiene rubber, acrylate butadiene rubber (ABR), or ethylene propylene rubber; a fluoride-based binder such as polyvinylidene fluoride (PVdF), a polyvinylidene fluoride-polyhexafluoropropylene copolymer (PVdF-HFP), polytetrafluoroethylene, or fluororubber, a polyolefin-based thermoplastic resin such as polyethylene, polypropylene, or polystyrene, an imide-based resin such as polyimide or polyamide-imide; an amide-based resin such as polyamide; an acrylic-based resin such as polymethyl acrylate or polyethyl acrylate; a methacrylic-based resin such as polymethyl methacrylate or polyethyl methacrylate; or a combination thereof.

The content of the binder in the electrode mixture is not particularly limited and can be appropriately set in consideration of the desired binding properties and the like.

### <Additional Component>

The electrode mixture may or may not further contain a component other than the above.

### <<Battery>>

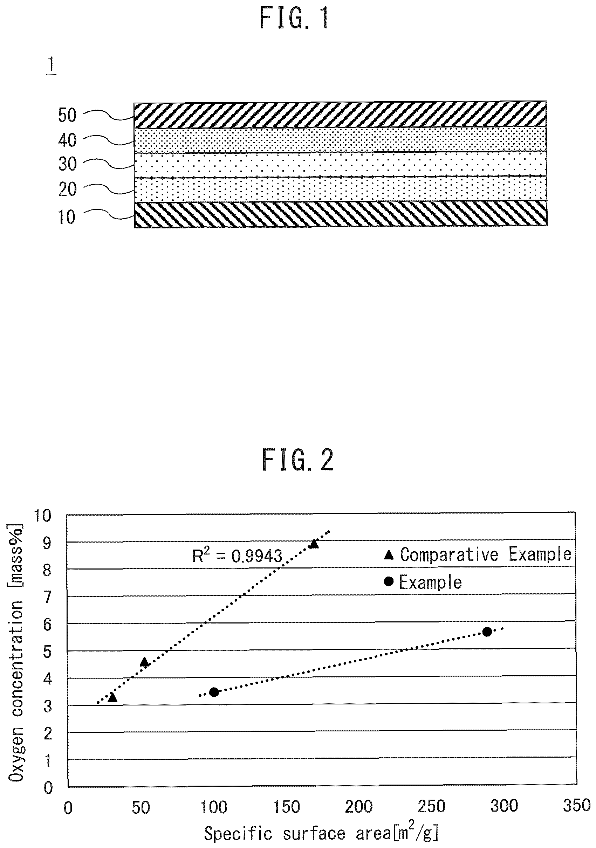

The battery of the present disclosure has a negative electrode active material layer, and the negative electrode active material layer includes the electrode mixture of the present disclosure. More specifically, in the battery of the present disclosure, the electrode mixture of the present disclosure is used as a negative electrode mixture. As illustrated in Fig. 1, a battery 1 of the present disclosure may include a negative electrode current collector layer 10, a negative electrode active material layer 20 including the electrode mixture of the present disclosure, an electrolyte layer 30, a positive electrode active material layer 40, and a positive electrode current collector layer 50 in this order.

The battery of the present disclosure may be a liquid-based battery or a solid-state battery, particularly a solid-state battery. The solid-state battery may include a combination of a solid electrolyte and a liquid electrolyte as an electrolyte. The solid-state battery may be an all-solid-state battery, i.e., a battery including only a solid electrolyte as the electrolyte.

The battery of the present disclosure may be a secondary battery, particularly a lithium ion secondary battery.

The battery of the present disclosure may be restrained by a restraint member, such as an end plate, from both sides in the stacking direction of the layers. Examples of the restraint method include, but are not limited to, a method using the restraint torque of the bolt.

Hereinafter, each element constituting the battery of the present disclosure will be described. In particular, a case wherein the battery of the present disclosure is an all-solid-state battery will be described below as an example.

### <Negative Electrode Current Collector Layer>

The negative electrode current collector layer may have a foil shape, a plate shape, a mesh shape, a perforated metal shape, a foam, or the like. The negative electrode current collector layer may be a metal foil, a metal mesh, or a carbon sheet, particularly a metal foil. The negative electrode current collector layer may be made of a plurality of foils, sheets, or the like.

The metal constituting the negative electrode current collector layer is not particularly limited, and may be, for example, copper, nickel, chromium, gold, platinum, silver, aluminum, iron, titanium, zinc, cobalt, stainless steel, or the like. In particular, the negative electrode current collector layer may contain at least one metal selected from copper, nickel, and stainless steel.

For the purpose of adjusting the resistance, a coating layer of some kind may be formed on the surface of the negative electrode current collector layer. The negative electrode current collector layer may be a metal foil or a substrate on which the above metal is plated or vapor-deposited. In addition, when the negative electrode current collector layer is composed of a plurality of metal foils, some layer may be provided between the plurality of metal foils.

The thickness of the negative electrode current collector layer is not particularly limited, and may be, for example, 0.1 µm or more, or 1 µm or more, and may be 1 mm or less, or 100 µm or less.

### <Negative Electrode Active Material Layer>

The negative electrode active material layer includes the electrode mixture of the present disclosure. Reference may be made to the above description regarding the electrode mixture of the present disclosure. The negative electrode active material layer may be formed by shaping the electrode mixture of the present disclosure itself into a layer.

The thickness of the negative electrode active material layer is not particularly limited, and may be, for example, 0.1 µm or more and 1000 µm or less.

### <Solid Electrolyte Layer>

The solid electrolyte layer includes at least solid electrolyte particles and may optionally further include a binder and the like.

Reference may be made to the above description regarding the solid electrolyte particles and binder.

The thickness of the solid electrolyte layer is not particularly limited, and may be, for example, 0.1 µm or more and 1000 µm or less.

### <Positive Electrode Active Material Layer>

The positive electrode active material layer includes at least a positive electrode active material, and may optionally further include a solid electrolyte, a conductive additive, a binder, and the like.

The positive electrode active material is not particularly limited, and may be, for example, an oxide active material. The oxide active material used in the lithium ion battery may be, for example, LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like. A coating layer containing a Li-ion conductive oxide such as LiNbO₃ may be formed on the surface of the active material.

The content of the positive electrode active material in the positive electrode active material layer is not particularly limited.

Reference may be made to the above description regarding the solid electrolyte, conductive additive, and binder.

The thickness of the positive electrode active material layer is not particularly limited, and may be, for example, 0.1 µm or more and 1000 µm or less.

### <Positive Electrode Current Collector Layer>

The positive electrode current collector layer may have a foil shape, a plate shape, a mesh shape, a perforated metal shape, a foam, or the like. The positive electrode current collector layer may be a metal foil or a metal mesh, particularly a metal foil. The positive electrode current collector layer may be made of a plurality of foils.

The metal constituting the positive electrode current collector layer may be copper, nickel, chromium, gold, platinum, silver, aluminum, iron, titanium, zinc, cobalt, stainless steel, or the like, and in particular, the positive electrode current collector layer may contain aluminum.

For the purpose of adjusting the resistance, a coating layer of some kind may be formed on the surface of the positive electrode current collector layer. The positive electrode current collector layer may be a metal foil or a substrate on which the metal is plated or vapor-deposited. In addition, when the positive electrode current collector layer is composed of a plurality of metal foils, some layer may be provided between the plurality of metal foils.

The thickness of the positive electrode current collector layer is not particularly limited, and may be, for example, 0.1 µm or more, or 1 µm or more, and may be 1 mm or less, or 100 µm or less.

### <Additional Configuration>

The battery may be one in which each of the above-described configurations is housed inside the outer package. As the outer package, any known outer package of a battery can be adopted. A plurality of batteries may be electrically connected to each other as desired, or may be stacked on each other as desired to form a battery pack. In this case, the battery pack may be housed in a known battery case. The battery may further have an obvious configuration such as a necessary terminal. The shape of the battery may be, for example, a coin shape, a laminate (pouch) shape, a cylindrical shape, a square shape, or the like.

The method for producing the battery of the present disclosure is not particularly limited, and includes, for example, forming a negative electrode active material layer containing the electrode mixture of the present disclosure.

Examples of the method of forming the negative electrode active material layer containing the electrode mixture include a method of mixing constituent materials such as porous silicon electrode active material particles to obtain an electrode mixture, the obtained electrode mixture being subjected to dry molding or wet molding.

The method for producing a battery of the present disclosure may further include forming an electrode laminate by laminating a negative electrode current collector layer, a negative electrode active material layer, a solid electrolyte layer, a positive electrode active material layer, and a positive electrode current collector layer in this order.

Other members such as a terminal are attached to the electrode laminate, if necessary. The electrode laminate is housed in a battery case and sealed to obtain a battery.

### EXAMPLES

### <<Example 1>>

### <Preparation of Porous Silicon Electrode Active Material Particles>

### (Preparation of Precursor Particles)

Porous silica particles (Wakosil 60, available from FUJIFILM Wako Pure Chemical Corporation) as a starting material (average pore diameter: 6 nm) and magnesium were mixed at 700°C over 10 hours. Thus, precursor particles containing silicon and magnesium oxide was obtained.

### (Removal of Magnesium Oxide)

The precursor particles were treated with hydrochloric acid to dissolve and remove the magnesium oxide from the precursor particles. Thus, pores were formed in the silicon to obtain porous silicon electrode active material particles. The molar ratio of magnesium oxide to hydrochloric acid was 1:5.

The oxygen concentration, the pore volume, the specific surface area, the mode diameter of pores, the half-value width in the pore distribution, and the d50 particle diameter of the obtained porous silicon electrode active material particles were, for example, measured and calculated as follows:
- Oxygen concentration: The mass ratio of oxygen was measured using an oxygen/nitrogen/hydrogen analyzer (ONH analyzer) (EMGA-930, available from HORIBA Ltd.).
- Specific surface area: A sample was measured by a nitrogen adsorption method and a BET method using a specific surface area/pore size analyzer (ELSORP MAX X, available from MicrotracBEL Corp.).
- Pore volume: A sample was measured by a nitrogen adsorption method using a specific surface area/pore size analyzer (ELSORP MAX X, available from MicrotracBEL Corp.) to calculate the pore volume from the integrated pore volume distribution obtained by a BJH method.
- Mode diameter of pores: A sample was measured by a nitrogen adsorption method using a specific surface area/pore size analyzer (ELSORP MAX X, available from MicrotracBEL Corp.) to extract a value indicating the peak top of a log differential pore volume distribution obtained by a BJH method.
- Half-value width. The half-value width was calculated from the integrated pore volume distribution.
- d50 Particle diameter: The d50 particle diameter was measured by a laser diffraction/scattering method using a laser diffraction/scattering apparatus (Partica LA-960V2, available from HORIBA Ltd.) with water as a solvent.

### <Production of Negative Electrode Active Material Layer>

Porous silicon electrode active material particles as a negative electrode active material and a sulfide solid electrolyte (volume ratio: 100:80) were added to a dispersion medium, and these were mixed with an ultrasonic homogenizer to obtain a negative electrode mixture slurry. The obtained slurry was applied onto a copper foil as a negative electrode current collector layer by blade coating, and the dispersion medium was dried and removed to obtain a coating film. The coating film was densified by pressing to obtain a negative electrode laminate in which the negative electrode active material layer was formed on the negative electrode current collector layer.

### <Production of Positive Electrode Active Material Layer>

A material obtained by surface-treating LiNi_{1/3}Co_{1/3}Mn_{1/3}O₂ as a positive electrode active material with lithium niobate (LiNbO₃), a sulfide solid electrolyte, VGCF (available from Resonac Corporation) as a conductive additive, and PVdF (available from Kureha Corporation) as a binder (volume ratio: 100:25:6:3) were added to a dispersion medium, and these were mixed with an ultrasonic homogenizer to obtain a positive electrode mixture slurry. The obtained slurry was applied onto an aluminum foil as a positive electrode current collector layer by blade coating, and the dispersion medium was removed by drying. As a result, a positive electrode laminate in which a positive electrode active material layer was formed on a positive electrode current collector layer was obtained.

### <Production of Solid Electrolyte Layer>

In a 1 cm² cylinder made of Macor, 100 mg of the solid electrolyte was placed and pressed at a pressure of 100 MPa to prepare a solid electrolyte layer.

### <Production of Battery>

The negative electrode laminate was disposed so that the negative electrode active material layer faced one of the surfaces of the solid electrolyte layer, and pressed at a pressure of 100 MPa. Further, the positive electrode laminate was disposed so that the positive electrode active material layer faced the other side of the solid electrolyte layer, and pressed at a pressure of 500 MPa. Thus, an all-solid-state battery of Example 1 was obtained.

### <Evaluation>

The obtained battery was charged to 4.55 V at a constant current of 0.245 mA and a constant voltage, and then discharged to 3.0 V at a constant current of 0.245 mA and a constant voltage.

### (Initial Charge-Discharge Efficiency)

The ratio of the initial charge capacity to the initial discharge capacity (initial charge capacity/initial discharge capacity) of the battery charged and discharged as described above was calculated.

### (Restraint Pressure Increase Amount)

During the charging and discharging, the restraint pressure (MPa/mAh) of the battery was measured. The initial restraint pressure was subtracted from the restraint pressure at 4.55 V to determine the restraint pressure increase amount. The restraint pressure increase amount means the amount of expansion of the porous silicon electrode active material particles, and a smaller value indicates a good result.

### <<Example 2>>

An all-solid-state battery of Example 2 was obtained and evaluated in the same manner as in Example 1 except that porous silica particles (average pore diameter: 10 nm) (Inertsil SIL-100A, available from GL Sciences Inc.) were used as a starting material, and the firing temperature was changed as listed in Table 1.

### <<Comparative Example 1 to 3>>

All-solid-state batteries of Comparative Examples 1 to 3 were obtained and evaluated in the same manner as in Example 1 except that solid silica particles were used as a starting material and the firing temperature was changed as listed in Table 1.

The results are shown in Table 1. In Table 1, the initial charge-discharge efficiency and the restraint pressure increase amount of Comparative Example 1 are set to 100.0, and the initial charge-discharge efficiency and the restraint pressure increase amount of each of the other examples are shown as relative values.

### [Table 1]

**Table 1**

| | Starting material | | Production condition | | Oxygen concentration [mass%] | Oxygen concentration [mass%] /specific surface area [m²/g] | Pore volume [cc/g] | Specific surface area [m²/g] | Mode diameter of pores [nm] | Half-value width of pore distribution [nm] | d50 Particle diameter [nm] | Evaluation Results | |
|---|---|---|---|---|---|---|---|---|---|---|---|---|---|
| | Type | Average pore diameter [nm] | Firing temperature [°C] | Firing time [h] | | | | | | | | Initial charge-discharge efficiency [-] | Restraint pressure increase amount [-] |
| Example 1 | Porous silica | 6 | 700 | 10 | 5.6 | 0.019 | 1.1 | 289 | 35 | 25 | 5.5 | 103.6 | 99.2 |
| Example 2 | Porous silica | 10 | 750 | 10 | 3.5 | 0.034 | 1.1 | 101 | 50 | 45 | 5.6 | 108.8 | 99.2 |
| Comparative Example 1 | Solid silica | - | 700 | 10 | 8.9 | 0.052 | 0.8 | 170 | 20 | 81 | 2.2 | 100.0 | 100.0 |
| Comparative Example 2 | Solid silica | - | 850 | 10 | 3.3 | 0.106 | 0.6 | 31 | 209 | 150 | 2.2 | 115.0 | 152.7 |
| Comparative Example 3 | Solid silica | - | 800 | 10 | 4.6 | 0.086 | 0.8 | 53 | 106 | 80 | 2.2 | 111.9 | 141.2 |

As shown in Table 1, in the porous silicon electrode active material particles produced by the method of the present disclosure, the oxygen concentration, the value of oxygen concentration (mass%)/specific surface area (m²/g), and the pore volume were within the ranges of the present disclosure. Accordingly, in the batteries of Example, the initial charge-discharge efficiency was improved without increasing restraint pressure, i.e., without causing expansion of the porous silicon electrode active material particles, as compared with the battery of Comparative Example 1. The reason for this will now be considered below.

Fig. 2 is a graph showing a relationship between a specific surface area (m²/g) and an oxygen concentration (mass%) for each of porous silicon electrode active material particles of Examples and Comparative Examples. Fig. 2 shows that in the porous silicon electrode active material particles of Examples, the degree of increase in oxygen concentration with the increase in specific surface area is small. It should be noted that Fig. 2 shows that the porous silicon electrode active material particles of Comparative Examples have a correlation between the specific surface area and the oxygen concentration, and therefore it is suggested that the porous silicon electrode active material particles of Examples also have a correlation between the specific surface area and the oxygen concentration.

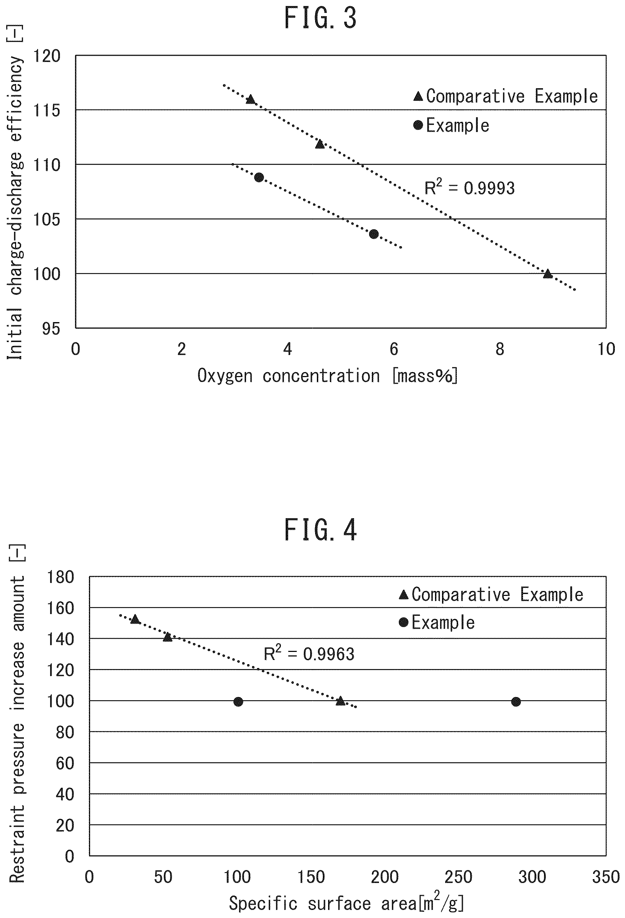

Fig. 3 is a graph showing a relationship between an oxygen concentration of porous silicon electrode active material particles and initial charge-discharge efficiency of a battery for each of Examples and Comparative Examples. Fig. 3 shows that there is a correlation between the oxygen concentration and the initial charge-discharge efficiency in Comparative Examples, and thus it is suggested that there is a correlation between the oxygen concentration and the initial charge-discharge efficiency in Examples.

As described above, in the porous silicon electrode active material particles of the present disclosure, since the value of oxygen concentration (mass%)/specific surface area (m²/g) is within a predetermined range, the degree of increase in oxygen concentration with the increase in specific surface area is small, thus supporting the validity of the mechanism indicating that the initial charge-discharge efficiency can be improved.

Fig. 4 is a graph showing a relationship between a specific surface area of porous silicon electrode active material particles and a restraint pressure increase amount of a battery for each of Examples and Comparative Examples. As shown in Fig. 4, in Comparative Examples, there was a correlation between the specific surface area and the restraint pressure increase amount, whereas in Examples, the restraint pressure increase amount was constant regardless of the specific surface area. The specific surface area of the porous silicon electrode active material particles of Example 2 was smaller than the specific surface area of the porous silicon electrode active material particles of Comparative Example 1. Nevertheless, the restraint pressure increase amount of the battery of Example 2 was smaller than the restraint pressure increase amount of the battery of Comparative Example 1.

This supports the validity of the above-described mechanism, indicating that in the porous silicon electrode active material particles of the present disclosure, which has a relatively large pore volume, the size of the specific surface area also affects the magnitude of expansion and contraction, but the magnitude of the pore volume is rather the dominant factor.

### REFERENCE SIGNS LIST

- 1: Battery
- 10: Negative electrode current collector layer
- 20: Negative electrode active material layer
- 30: Electrolyte layer
- 40: Positive electrode active material layer
- 50: Positive electrode current collector layer

## Claims

1. A method for producing porous silicon electrode active material particles, the method including:
(a) reducing porous silica particles with magnesium to obtain precursor particles containing silicon and magnesium oxide; and
(b) removing the magnesium oxide from the precursor particles.

2. The method according to claim 1, wherein an average pore diameter of the porous silica particles is from 1 nm to 20 nm.

3. The method according to claim 1 or 2, wherein in Step (a), the porous silica particles are reduced with the magnesium at a temperature of from 650°C to 800°C

4. The method according to any one of claims 1 to 3, wherein in Step (a), the porous silica particles are reduced with the magnesium by mixing the porous silica particles and the magnesium.

5. The method according to any one of claims 1 to 4, wherein in Step (b), the magnesium oxide is removed by treating the precursor particles with an acid.

6. Porous silicon electrode active material particles:
wherein an oxygen concentration is 6.5 mass% or less,
wherein a ratio of the oxygen concentration, expressed in mass%, to a specific surface area, expressed in m²/g, is 0.050 or less, and
wherein a pore volume is 0.9 cc/g or more.

7. The porous silicon electrode active material particles according to claim 6,
wherein the oxygen concentration is from 3.0 mass% to 6.0 mass%,
wherein the ratio of the oxygen concentration, expressed in mass%, to the specific surface area, expressed in m²/g, is from 0.015 to 0.040, and
wherein the pore volume is from 0.9 cc/g to 1.5 cc/g.

8. The porous silicon electrode active material particles according to claim 6 or 7, wherein the specific surface area is from 50 m²/g to 300 m²/g.

9. The porous silicon electrode active material particles according to any one of claims 6 to 8, wherein a mode diameter of pores is from 25 nm to 100 nm.

10. The porous silicon electrode active material particles according to any one of claims 6 to 9, wherein a half-value width in a pore distribution is from 20 nm to 75 nm.

11. The porous silicon electrode active material particles according to any one of claims 6 to 10, wherein a d50 particle diameter is from 3.0 µm to 8.0 µm.

12. An electrode mixture including the porous silicon electrode active material particles according to any one of claims 6 to 11.

13. A battery, having a negative electrode active material layer, wherein
the negative electrode active material layer includes the electrode mixture according to claim 12.

14. The battery according to claim 13, wherein the battery is a solid-state battery.
